# FASCICULE DE BREVET EUROPEEN

(11) **EP 1 364 874 B1**
(45) Date de publication et mention de la délivrance du brevet: **08.03.2006**
(21) Numéro de dépôt: 03291186.9
(22) Date de dépôt: 20.05.2003
(51) Int. Cl.: B64D 11/06, B64D 11/00

(54) **Module individuel pour passager d'aéronef**
Individuelles Modul für Flugzeugpassagiere
Individual module for aircraft passengers

(30) Priorité: 22.05.2002 FR 0206239
(43) Date de publication de la demande: 26.11.2003
(73) Titulaire: Airbus, 31700 Blagnac (FR)
(72) Inventeur: Saint-Jalmes, Bruno, 31500 Toulouse (FR)
(74) Mandataire: Hartmann, Jean-Luc

(56) Documents cités:
- EP-A- 1 162 138
- WO-A-00/21831

## Description

La présente invention concerne un module individuel pour passager d'aéronef.

Dans un aéronef, chaque passager dispose d'un siège. Généralement les sièges dans l'aéronef sont disposés en rangées transversales par rapport au sens de déplacement de l'aéronef et les sièges sont orientés vers l'avant de celui-ci. II existe parfois des compartiments de classes différentes. Les sièges sont alors plus ou moins espacés, plus ou moins confortables et plus ou moins modulables (dossier inclinable, siège convertible en lit, siège inclinable, etc...).

On retrouve généralement dans toutes les classes ce même alignement de sièges. A chaque passager est ainsi alloué un espace sensiblement rectangulaire et ces espaces rectangulaires sont alignés en rangées et colonnes dans la cabine de l'aéronef.

Des contraintes existent pour réaliser cet alignement. Il faut prévoir des couloirs pour le déplacement des passagers et pour leur évacuation en cas d'urgence. Des portes de secours doivent également être prévues. Il faut notamment pouvoir évacuer l'avion dans un laps de temps défini par une norme. Il faut également que les passagers soient assis lors des phases de décollage et d'atterrissage et soient orientés longitudinalement par rapport à l'avion (dans le sens du déplacement ou dans le sens opposé).

La présente invention a alors pour but de fournir des moyens permettant d'aménager une cabine d'aéronef en respectant les contraintes de sécurité et permettant de loger, dans un même espace, un plus grand nombre de passagers.

A cet effet, elle propose un module individuel pour passager d'aéronef comportant un siège destiné à être orienté selon une direction longitudinale de l'aéronef.

Un tel module individuel pour passager de l'art antérieur est connu de EP-A-1 162 138.

Dans une forme de réalisation, un tel module présente par exemple :
une première extrémité sensiblement rectiligne,
une seconde extrémité sensiblement rectiligne de largeur moindre et sensiblement parallèle à la première extrémité,
un bord sensiblement rectiligne reliant les deux extrémités et sensiblement perpendiculaire à ces deux extrémités, et
un bord opposé au bord sensiblement rectiligne reliant lui aussi les deux extrémités et comportant d'une part un premier segment sensiblement rectiligne s'étendant à partir de la seconde extrémité vers la première extrémité de façon divergente par rapport au bord sensiblement rectiligne opposé et d'autre part un second segment reliant l'extrémité libre du premier segment à la première extrémité.

Dans cette forme de réalisation on peut prévoir par exemple que le second segment est sensiblement parallèle au bord rectiligne opposé ou bien encore que le second segment s'étend de la première extrémité vers la seconde extrémité de façon divergente par rapport au bord rectiligne opposé. Dans cette dernière variante, l'angle de divergence du premier segment est de préférence supérieur à l'angle de divergence du second segment.

La présente invention propose également un module individuel pour passager d'aéronef comportant :
un siège, comportant une assise et un dossier et des accoudoirs, destiné à être orienté selon une direction longitudinale de l'aéronef,
un équipement disposé en regard et à distance du siège, de largeur inférieure à celle du siège,
une paroi latérale s'étendant entre un côté du siège et un côté de l'équipement, au moins au niveau de l'assise du siège,
cette paroi latérale, ce siège et cet équipement définissant un espace de forme allongée ayant une extrémité de grande largeur occupée par le siège et une extrémité de moindre largeur occupée par cet équipement, une ouverture d'accès étant disposée entre les extrémités à l'opposé de la paroi latérale.

Cet espace a par exemple un contour qui s'évase à partir de chacune des extrémités. Dans ce cas, on prévoit de préférence que l'extrémité étroite est moins évasée que l'extrémité large, de sorte que l'espace a une zone de largeur maximale qui est plus proche de l'extrémité large que de l'extrémité étroite.

Les extrémités du module ont par exemple chacune une branche qui est sensiblement dans le prolongement d'une branche de l'autre extrémité. Dans ce cas, la paroi latérale est par exemple disposée entre les branches opposées à celles qui sont sensiblement dans le prolongement l'une de l'autre.

Dans un module selon l'invention, on peut prévoir que les extrémités de l'espace de forme allongée sont matérialisés chacune par une paroi d'extrémité en U. La paroi latérale s'étend alors par exemple depuis l'une des parois d'extrémité jusqu'à l'autre. De préférence, les parois d'extrémité en U sont munies chacune de moyens de fixation pour leur fixation sur des rails de fixation longitudinaux disposés dans le sol de la cabine. Ainsi on peut utiliser pour ces parois de moyens de fixation identiques, ou quasi identiques à ceux que l'on utilise habituellement pour fixer un siège d'aéronef sur le sol d'une cabine d'aéronef.

La paroi latérale peut être de hauteur variable. L'ouverture a quant à elle une dimension horizontale de préférence égale à la largeur de la paroi latérale.

L'équipement équipant le module comporte avantageusement une surface d'appui disposée à une hauteur sensiblement égale à celle de l'assise du siège, à une dizaine de centimètres près, à une hauteur comprise entre par exemple 0,45 m et 0,60 m. La hauteur des parois d'extrémité est quant à elle par exemple comprise entre 0,45 m et 1,50 m.

Le siège utilisé dans un module selon l'invention est par exemple d'un type transformable dont le dossier peut s'incliner vers l'arrière, de préférence jusqu'à une configuration horizontale.

Le module a de préférence une longueur comprise entre 1,80 m et 2,10 m. Cette longueur permet de recevoir un passager en lui laissant assez de place pour s'allonger sans gêner son voisin. Pour que le passager puisse être confortablement installé on peut prévoir une largeur maximale comprise entre 0,50 m et 0,70 m pour le module.

La présente invention prévoit aussi de réaliser des ensembles comportant au moins deux modules selon l'invention.

Elle prévoit ainsi d'avoir une paire de deux modules selon l'invention, disposés tête-bêche en étant accolés l'un à l'autre, ces modules présentant des contours identiques. Différentes configurations d'une telle paire de modules sont définies dans des sous revendications annexées.

Elle prévoit aussi un alignement de modules selon l'invention, caractérisé en ce que ces modules définissant des espaces identiques sont disposés dans le prolongement l'un de l'autre, avec des orientations identiques, les ouvertures de ces modules étant alignées les unes avec les autres. Deux modules successifs présentent par exemple dans un tel alignement, respectivement, une extrémité étroite à proximité immédiate d'une extrémité large.

La présente invention concerne aussi un groupement de modules formé de modules disposés selon deux alignements, en sorte de former une succession de paires de modules.

Elle concerne aussi un tronçon de pont de cabine d'aéronef, comportant une pluralité de modules selon l'invention et en particulier lorsque ces modules sont disposés comme prévus dans les sous revendications concernant un tel tronçon dans le jeu de revendications annexé.

Des détails et avantages de l'invention ressortiront de la description qui suit, faite en référence au dessin schématique annexé sur lequel :
La figure 1 montre schématiquement un premier exemple de module selon l'invention,
Les figures 2A à 2C montrent schématiquement deux modules de la figure 1 combinés,
La figure 3 montre une variante du module de la figure 1,
La figure 4 montre une autre variante du module de la figure 1,
Les figures 5A à 5F montrent deux modules de la figure 4 coopérant l'un avec l'autre,
La figure 6 représente en éclaté le module de la figure 4,
Les figures 7 et 8 montrent chacune une variante du module de la figure 4,
La figure 9 montre une tronçon de cabine d'aéronef équipé de module individuel selon l'invention, et
La figure 10 montre un autre tronçon de cabine avec une configuration différente de celle représentée sur la figure 9 avec des modules selon l'invention.

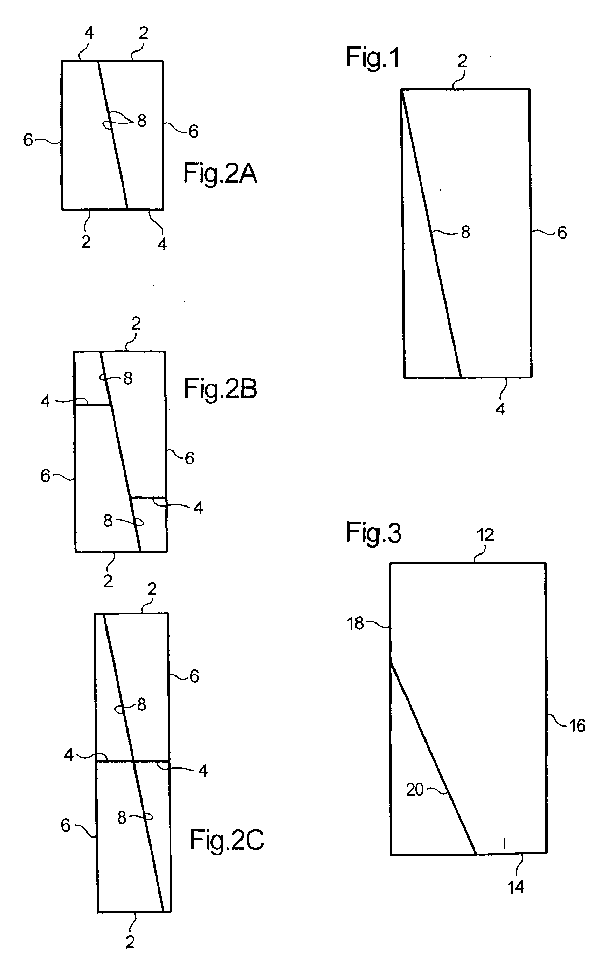

La figure 1 représente en vue de dessus l'espace prévu pour recevoir un passager dans une cabine d'aéronef. Cet espace reçoit un siège, éventuellement convertible en lit, et éventuellement d'autres accessoires tels par exemple un coffre de rangement, une télévision, un repose-pieds, etc.... Cet espace ainsi équipé définit un module s'inscrivant dans un contour en forme de trapèze rectangle allongé, le côté perpendiculaire aux bases du trapèze étant sensiblement plus long que chacune des bases. Cet espace comporte ainsi une grande base 2, une petite base 4, un grand côté droit 6 et un grand côté incliné 8.

Les figures 2A à 2C montrent comment deux modules tels celui représenté sur la figure 1 peuvent coopérer pour occuper au mieux la place disponible dans une cabine d'aéronef. Sur ces trois figures, les deux modules sont placés tête-bêche, leurs grands côtés inclinés 8 venant au contact l'un de l'autre.

Sur la figure 2A, les grands côtés inclinés 8 sont au contact l'un de l'autre sur toute leur longueur. La grande base 2 d'un module est alors alignée avec la petite base 4 de l'autre module. L'ensemble des deux modules présente une forme globale rectangulaire compacte. Cette configuration est courte (mesurée dans la direction donnée par les grands côtés droits 6) mais large (mesurée dans la direction donnée par les bases).

A l'inverse, la figure 2C montre une configuration des deux modules longue mais étroite. Les deux modules sont décalés et leurs deux petites bases 4 sont alignées. La longueur de cet ensemble correspond au double de la longueur d'un seul module mais la largeur de l'ensemble est à peine plus large qu'un module unique alors que dans la première configuration (figure 2A) la longueur de l'ensemble correspond à la longueur d'un seul module et la largeur correspond à la somme des longueurs des bases 2 et 4.

La figure 2B montre quant à elle une position intermédiaire obtenue en faisant coulisser les modules individuels l'un par rapport à l'autre le long des grands côtés inclinés 8. Un grand nombre de positions intermédiaires peuvent être choisies.

Cette modularité permet de s'adapter parfaitement à la cabine d'aéronef dans laquelle seront placés les modules. Dans une cabine d'aéronef, deux dimensions sont importantes pour placer les sièges, et donc ici les modules : il s'agit de la longueur disponible entre deux issues de secours d'une part et la largeur de la cabine d'autre part. La modularité offerte par la forme des modules permet d'optimiser le nombre de modules, et donc de passagers, pouvant être logés dans un tronçon de cabine se trouvant entre deux issues de secours.

La figure 3 représente une variante de réalisation d'un module selon l'invention. La forme du module n'est plus trapézoïdale. On retrouve toutefois deux petits côtés 12 et 14 parallèles, un grand côté droit 16 perpendiculaire aux petits côtés 12 et 14 et un autre grand côté faisant face au grand côté droit 16. Comme pour la forme de réalisation trapézoïdale de la figure 1, les deux petits côtés sont de longueurs inégales. Le petit côté 14 est plus court que le petit côté 12. Par analogie au trapèze, on appellera le petit côté 12 grande base et le petit côté 14 petite base. La variante ici, par rapport au module de la figure 1, réside dans le côté opposé au côté droit 16. Ce côté est réalisé en deux segments. Un premier segment 18 est disposé à angle droit à une extrémité de la grande base 2 (il est donc parallèle au grand côté droit 16). Un second segment incliné 20 relie l'extrémité libre du segment droit 18 à la petite base 14.

De même que les modules trapézoïdaux (figures 1 et 2) peuvent coopérer en étant placés l'un contre l'autre, les grands côtés inclinés 8 se faisant face, il est possible de faire coopérer deux modules de la figure 3 en les plaçant l'un contre l'autre, les deux segments inclinés 20 se faisant face. On peut ici aussi réaliser des configurations soit compactes (petite longueur et grande largeur comme sur la figure 2A) ou des configurations allongées (grande longueur et faible largeur comme sur la figure 2C).

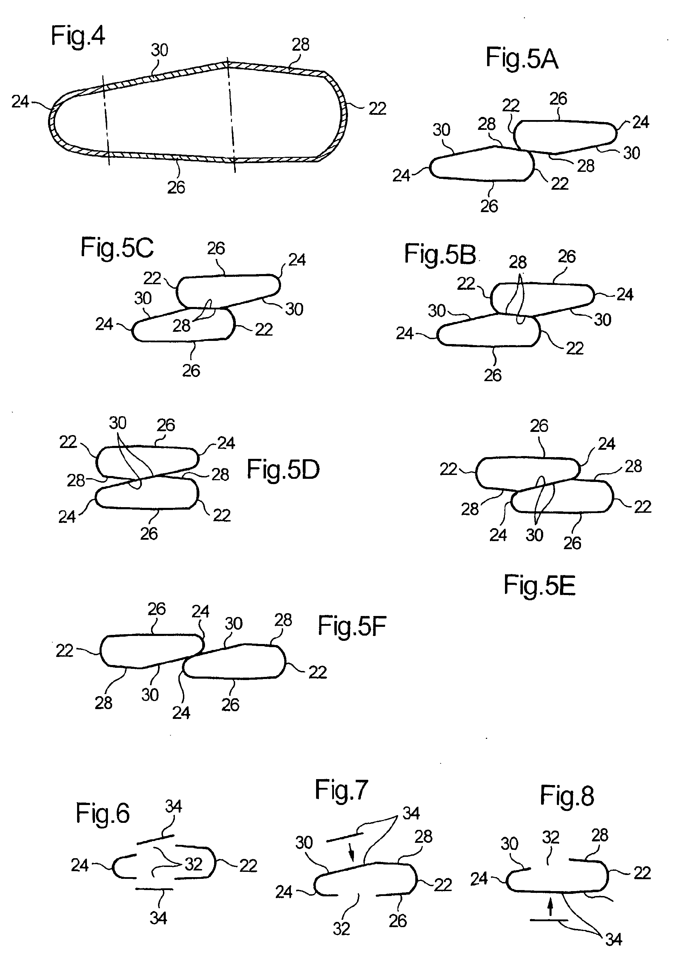

Une forme de réalisation préférée est représentée sur la figure 4. On retrouve ici un module de forme générale allongée présentant deux extrémités, l'une étant plus étroite que l'autre. Dans cette variante, par rapport aux variantes des figures 1 et 3, les extrémités sont arrondies au lieu d'être rectilignes. Dans le principe, on retrouve une extrémité 22 de grande largeur comparable aux grandes bases 2 et 12 des figures 1 et 3 d'une part et une extrémité de petite largeur 24 comparable aux petites bases 4 et 14 des figures 1 et 3.

Ces deux extrémités 22 et 24 sont reliées par un grand côté rectiligne 26. Les deux extrémités 22 et 24 sont toutes deux placées d'un même côté du grand côté droit 26 et s'étendent sensiblement perpendiculairement à ce côté.

Le côté opposé au grand côté droit 26 est ici également réalisé en deux segments. Un premier segment 28 s'étend à partir de la grande extrémité 22, du côté opposé au côté 26, en divergeant par rapport au grand côté droit 26. L'angle de divergence est ici de 4°. Il est par exemple compris entre 3° et 10°.

Le second segment 30 part quant à lui de la petite extrémité 24, du côté opposé au grand côté droit 26, et diverge également par rapport au grand côté droit 26. L'angle de divergence est plus important que pour le premier segment 28 et est ici de 8°. Il est par exemple compris entre 5° et 20°.

Les figures 5A à 5F montrent des exemples de positionnement relatif de deux modules tels celui de la figure 4. Les modules présentent deux bords inclinés. Comme précédemment, les modules coopèrent ici en étant placés l'un contre l'autre, deux bords inclinés similaires se faisant face. Sur les figures 5A à 5C, on a représenté trois configurations dans lesquelles les premiers segments 28 sont au contact l'un de l'autre et sur les figures 5D à 5F, on a représenté des configurations dans lesquelles deux modules étaient en contact par leurs seconds segments 30.

Les configurations représentées sur les figures 5A à 5C montrent des configurations de forme relativement allongée. Compte tenu de l'angle relativement faible entre le premier segment 28 et le côté droit 26, la différence de largeur pour ces trois configurations n'est pas très importante. Elle est toutefois très intéressante dans le cas où les modules sont installés dans un tronçon de cabine de largeur variable. Ces variations de largeur sont généralement peu importantes. On les retrouve notamment du côté du cockpit et de la queue d'un aéronef. Ces configurations présentent l'avantage de permettre un excellent accès à chaque module pour les passagers.

Les figures 5D à 5F représentent sensiblement ce que l'on pourrait obtenir avec des modules tels celui représenté sur la figure 3 puisqu'ici le premier segment 28 n'intervient pas. La figure 5D représente la configuration d'un ensemble de deux modules présentant la longueur minimale (mesurée dans la direction du grand côté droit 26). Les autres configurations (figure 5E et figure 5F) sont de longueur plus importante mais de largeur moindre. On remarque que sur la figure 5F, la longueur de l'ensemble formé par les deux modules est sensiblement égale à la longueur de l'ensemble formé par les deux modules représentés sur la figure 5A, mais sur la figure 5F la largeur de l'ensemble est moindre.

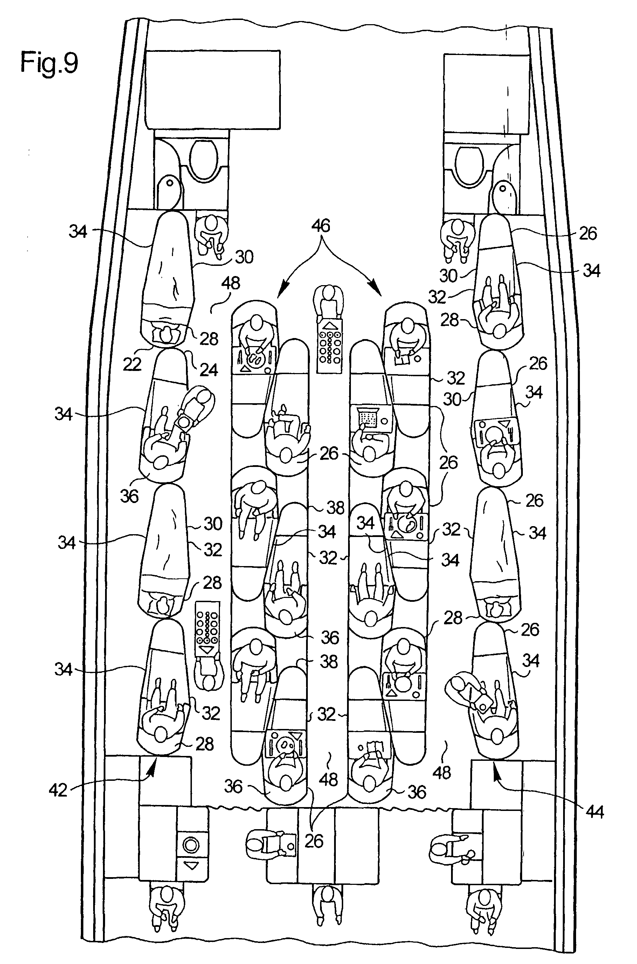

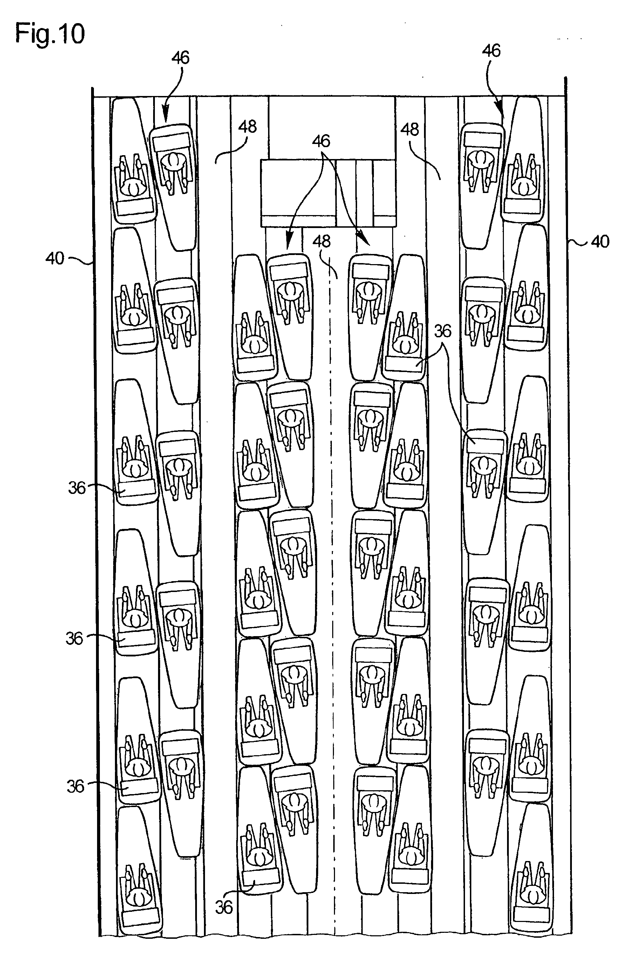

On remarque que sur toutes les configurations représentées sur les figures 5A à 5F, les grands côtés droits 26 des modules restent toujours parallèles l'un par rapport à l'autre. Cette remarque est également valable pour les modules de la figure 1 (cf figure 2A à 2C). On peut ainsi, en alignant l'un derrière l'autre des ensembles de deux modules créer un double alignement de modules disposés entre deux couloirs. Des exemples de réalisation sont représentés sur les figures 9 et 10 et seront décrits plus en détail plus loin.

Le pourtour d'un module peut être matérialisé par une paroi qui s'étend verticalement à partir du sol de la cabine. Cette paroi délimite alors l'espace prévu pour un passager durant un voyage. Cet espace est équipé d'un siège qui est disposé du côté de l'extrémité de plus grande largeur. Pour un passager en position assise, on envisage donc de placer le dossier de son siège le long des grandes bases 2 ou 12 (figure 1 ou 3) ou du côté de la grande extrémité 22. A l'autre extrémité, c'est-à-dire du côté de la petite extrémité 24 ou d'une petite base 4 ou 14, le module peut être équipé d'un accessoire comme par exemple un repose-pieds, un coffre à bagages, un téléviseur, etc.... De préférence, cet accessoire présente une surface d'appui sensiblement horizontale, placée à environ 40 à 60 cm du sol. Cette surface d'appui peut alors servir de table basse ou bien encore de siège d'appoint lorsque le passager souhaite discuter avec un autre passager. Dans le cas où le siège équipant le module est un siège convertible en lit, on peut prévoir que l'extrémité du lit, destinée à recevoir les pieds du passager, est constituée par l'accessoire placé au niveau de l'extrémité étroite du module. Dans ce cas, cet accessoire présente alors aussi une surface d'appui disposée sensiblement à même hauteur que l'assise du siège (à 20 cm près). Ainsi, des économies de poids peuvent être réalisées. En effet, un siège convertible en lit est relativement lourd et le fait de prévoir une extrémité fixe, servant éventuellement de logement pour un téléviseur, de coffre à bagages ou de strapontin, permet d'alléger le poids global du lit.

La paroi entourant le module est par exemple réalisée en matériau synthétique, par exemple moulée en polyuréthane, ou dans un matériau composite. Elle peut être revêtue d'un tissu (ou similaire) assorti au revêtement du siège placé à l'intérieur du module.

La paroi entourant le module est de préférence fixée au sol sur des rails de fixation. On utilise ici les rails de fixation qui sont prévus dans tout avion destiné au transport de passagers pour la fixation de sièges. Une série de rails longitudinaux sont prévus sur toute la largeur de la cabine. Des points d'ancrage régulièrement espacés (habituellement tous les pouces, soit avec un pas de 2,54 cm) le long de chaque rail sont prévus pour la fixation de sièges. Les moyens de fixation de la paroi entourant le module sont de préférence identiques à ceux utilisés classiquement pour la fixation de sièges sur les rails.

Les dimensions extérieures du module sont par exemple comprises entre 1,80 cm et 2,10 cm pour la longueur et entre 0,50 cm et 0,70 cm pour la largeur. Ces dimensions permettent de recevoir confortablement un passager en position assise ou allongée.

Pour permettre à un passager d'accéder à l'intérieur du module, il convient de prévoir un accès. La figure 6 montre un module correspondant à un module de la figure 4 avec deux ouvertures 32. Ces deux ouvertures sont identiques. Une première ouverture 32 est réalisée dans le grand côté droit 26 tandis que la seconde ouverture 32 est réalisée dans le second segment 30 du module. Chacune de ces ouvertures est réalisée à proximité de l'extrémité étroite 24.

La figure 6 représente également deux portes 34. Chacune de ces portes est destinée à fermer une ouverture 32. Généralement, un seul accès au module est nécessaire. Ainsi donc, chaque module est équipé généralement d'une porte 34. La figure 7 représente un module dans lequel une porte 34 vient fermer l'ouverture 32 se trouvant au niveau du second segment 30. Sur la figure 8, une porte 34 ferme l'ouverture 32 se trouvant au niveau du grand côté droit 26. On a alors dans ces deux cas de figure (cf figures 7 et 8) un module délimité sur tout son pourtour par une paroi latérale s'étendant verticalement, sur une hauteur comprise par exemple entre 70 et 90 cm, à partir du sol de la cabine, sauf au niveau d'une ouverture d'accès 32. Pour des raisons de modularité, une même porte peut aussi bien venir se placer au niveau d'un grand côté droit 26 que d'un second segment 30. La hauteur de la paroi est par exemple choisie de telle sorte qu'elle entoure la surface de couchage, lorsque le siège est convertible, sur une hauteur d'environ 20 à 30 cm pour isoler un passager qui dort de son environnement.

Les figures 9 et 10 montrent des exemples d'aménagement d'un tronçon de cabine avec des modules tels ceux représentés sur les figures 7 et 8.

Sur la figure 9, chaque module est équipé d'un siège 36 convertible, c'est-à-dire pouvant se transformer en un support sensiblement horizontal. Comme suggéré plus haut, un repose-pieds 38, placé au niveau de l'extrémité étroite 24, coopère avec le siège 36 convertible pour former un lit. Des fixations de même type sont utilisées pour la fixation du siège 36 et de la paroi du module correspondant.

La figure 9 représente un tronçon de cabine disposé entre deux issues de secours successives (non représentées). Ce tronçon de cabine est délimité latéralement par des parois de cabine 40.

Des modules individuels sont alignés dans cette cabine. On trouve ainsi un premier alignement 42 le long d'une paroi de cabine 40 et un second alignement 44 de modules individuels le long de l'autre paroi de cabine 40. Au centre de la cabine on trouve deux groupements 46. Ces groupements 46 sont formés de deux alignements de modules de manière à former une succession de paires de modules disposés tête-bêche en étant accolés l'un à l'autre, deux modules d'une même paire étant de même contour extérieur. Chaque alignement est séparé d'un alignement ou groupement voisin par un couloir 48. La largeur minimale des couloirs 48 est normalisée. Elle doit permettre une circulation aisée des passagers et autoriser le passage d'un chariot de service qui a généralement une largeur de 16 pouces soit environ 41 cm.

Les modules des deux alignements 42 et 44 sont disposés les uns derrière les autres, longitudinalement par rapport à la cabine de l'avion. Chaque module est équipé d'une porte 34 se trouvant du côté de la paroi de cabine correspondante. Les modules individuels sont ici alignés de telle sorte que les seconds segments 30 soient alignés le long du couloir. Ces seconds segments 30 présentent chacun une ouverture 32 permettant l'accès au module correspondant. Ainsi, toutes les ouvertures 32 des modules des deux alignements 42 sont alignées le long du couloir 48 correspondant.

On pourrait également avoir un alignement dans lequel le grand côté droit 26 de chaque module serait disposé le long du couloir. Ces grands côtés droits 26 seraient alors alignés. Pour chaque module, l'ouverture 32 serait donc naturellement réalisée au niveau de ce grand côté droit 26 tandis que l'ouverture se trouvant au niveau du second segment 30 serait obturée par une porte 34.

Les deux groupements 46 de modules sont symétriques par rapport à l'axe longitudinal médian du tronçon de cabine. Dans le cas représenté ici, les paires de modules formées dans ces groupements correspondent à la configuration représentée sur la figure 5E. Dans ce cas, les ouvertures 32 réalisées au niveau des seconds segments 30 de chacun de ces modules sont fermées par une porte 34 tandis que les ouvertures 32 réalisées au niveau du grand côté droit 26 de chacun de ces modules sont ouvertes. Chacune de ces ouvertures donne accès du module correspondant vers un couloir 48.

L'utilisation des modules permet ici de réaliser dans le tronçon de cabine une configuration à trois couloirs 48. Une telle configuration est tout à fait inhabituelle dans un aéronef. Ceci permet de créer un espace plus agréable et plus aéré, dont l'évacuation est facilitée. De plus, aucun passager voulant accéder à son siège, ou le quitter, n'a besoin de s'excuser auprès d'un passager voisin.

En outre, l'utilisation de modules permet de faire voyager quasiment autant de passagers que des configurations classiques où des sièges sont alignés en rangées. Ainsi, le tronçon de cabine représenté sur la figure 9 correspond à un tronçon de cabine qui permet normalement de placer vingt-deux sièges convertibles en lit, lorsque ceux-ci sont disposés en rangées et colonnes avec deux couloirs. Ici, comme on peut le remarquer sur la figure 9, vingt passagers peuvent prendre place confortablement dans le même tronçon d'aéronef.

La figure 10 montre un aménagement différent d'un tronçon de cabine. On retrouve sur cette figure deux parois de cabine 40 et trois couloirs 48. Il y a ici quatre groupements 46 de modules selon l'invention. Les couloirs 48 séparent deux à deux ces groupements 46.

Dans cet exemple d'utilisation des modules selon l'invention, les modules sont équipés uniquement d'un siège. Il s'agit par exemple d'un tronçon de cabine d'un aéronef destiné à réaliser uniquement des vols moyen courrier.

Le long de la paroi de cabine, les modules sont disposés dans une configuration correspondant sensiblement à celle représentée sur la figure 5B. Ainsi, le passager se trouvant le long de la paroi de cabine 40 n'est pas obligé de s'excuser auprès de son voisin se trouvant dans le même groupement mais le long du couloir 48 correspondant lorsqu'il souhaite quitter son siège ou y accéder. On remarque ici l'avantage de ce groupement de modules. En effet, on peut ainsi avoir l'équivalent d'une rangée de deux sièges le long des parois de la cabine sans que le passager se trouvant le long de la paroi de cabine 40 soit obligé de s'excuser lorsqu'il quitte sa place ou la regagne.

On remarque aussi sur cette configuration représentée sur la figure 10 qu'il est possible d'utiliser un module individuel pour compléter au mieux un espace. Sur cette figure 10, à une extrémité de chaque alignement se trouvant le long d'une paroi de cabine 40, un module individuel vient compléter l'espace restant libre.

Cette configuration représentée sur la figure 10 permet également de loger dans un tronçon de cabine quasiment autant de passagers que dans un tronçon de cabine identique équipé de sièges convertibles en lit mais disposés en rangées de sièges classiques.

La présente invention ne se limite pas aux formes de réalisation décrites ci-dessus à titre d'exemples non limitatifs. Elle concerne également toutes les variantes de réalisation à la portée de l'homme du métier dans le cadre des revendications ci-après.

## Revendications

1. Module individuel pour passager d'aéronef comportant un siège (36) destiné à être orienté selon une direction longitudinale de l'aéronef,
ce module présentant une forme allongée avec une première extrémité (12 ; 22) de grande largeur et une extrémité (14 ; 24) de largeur moindre sensiblement parallèle à la première extrémité,
avec un bord (16 ; 26) sensiblement rectiligne reliant les deux extrémités (12, 14 ; 22, 24) et sensiblement perpendiculaire à ces deux extrémités (12, 14 ; 22, 24), et
avec un bord opposé au bord (16; 26) sensiblement rectiligne reliant lui aussi les deux extrémités et comportant d'une part un premier segment (20 ; 30) sensiblement rectiligne s'étendant à partir de la seconde extrémité (14 ; 24) vers la première extrémité (12 ; 22) de façon divergente par rapport au bord (16 ; 26) sensiblement rectiligne opposé et d'autre part un second segment (18 ; 28) reliant l'extrémité libre du premier segment (20 ; 30) à la première extrémité.

2. Module individuel pour passager d'aéronef selon la revendication 1, **caractérisé en ce que** le second segment (18) est sensiblement parallèle au bord rectiligne (16) opposé.

3. Module individuel pour passager d'aéronef selon la revendication 1, **caractérisé en ce que** le second segment (28) s'étend de la première extrémité vers la seconde extrémité de façon divergente par rapport au bord rectiligne (26) opposé.

4. Module individuel pour passager d'aéronef selon la revendication 2, **caractérisé en ce que** l'angle de divergence du premier segment (30) est supérieur à l'angle de divergence du second segment (28).

5. Module individuel pour passager d'aéronef selon l'une des revendications 1 à 4 comportant :
un équipement (38) disposé en regard et à distance du siège (36), de largeur inférieure à celle du siège,
une paroi latérale (34) s'étendant entre un côté du siège et un côté de l'équipement, au moins au niveau de l'assise du siège,
cette paroi latérale, ce siège et cet équipement définissant un espace de forme allongée ayant une extrémité de grande largeur (22) occupée par le siège (36) et une extrémité de moindre largeur (24) occupée par cet équipement, une ouverture (32) d'accès étant disposée entre les extrémités à l'opposé de la paroi latérale.

6. Module selon la revendication 5, **caractérisé en ce que** l'espace a un contour qui s'évase à partir de chacune des extrémités (22, 24).

7. Module selon la revendication 6, **caractérisé en ce que** l'extrémité étroite (24) est moins évasée que l'extrémité large (22), de sorte que l'espace a une zone de largeur maximale qui est plus proche de l'extrémité large (22) que de l'extrémité étroite (24).

8. Module selon l'une des revendications 5 à 7, **caractérisé en ce que** les extrémités (22, 24) ont chacune une branche qui est sensiblement dans le prolongement d'une branche de l'autre extrémité.

9. Module selon la revendication 8, **caractérisé en ce que** la paroi latérale (34) est disposée entre les branches opposées à celles qui sont sensiblement dans le prolongement l'une de l'autre.

10. Module individuel selon la revendication 5, **caractérise en ce que** les extrémités (22, 24) de l'espace de forme allongée sont matérialisés chacune par une paroi d'extrémité en U.

11. Module selon la revendication 10, **caractérisé en ce que** la paroi latérale (34) s'étend depuis l'une des parois d'extrémité jusqu'à l'autre.

12. Module selon l'une des revendications 10 ou 11, **caractérisé en ce que** les parois d'extrémité en U sont munies chacune de moyens de fixation pour leur fixation sur des rails de fixation longitudinaux disposés dans le sol de la cabine.

13. Module selon l'une des revendications 5 à 12, **caractérisé en ce que** la paroi latérale (34) est de hauteur variable.

14. Module selon l'une des revendications 5 à 13, **caractérisé en ce que** l'ouverture (32) a une dimension horizontale égale à la largeur de la paroi latérale (34).

15. Module selon la revendication 5, **caractérisé en ce que** l'équipement (38) comporte une surface d'appui disposée à une hauteur sensiblement égale à celle de l'assise du siège, à une dizaine de centimètres près.

16. Module selon la revendication 15, **caractérisé en ce que** la surface d'appui est à une hauteur comprise entre 0,45 m et 0,60 m.

17. Module selon l'une des revendications 5 à 16, **caractérisé en ce que** les parois d'extrémité ont une hauteur comprise entre 0,45 m et 1,50 m.

18. Module selon l'une des revendications 5 à 17, **caractérisé en ce que** le siège (36) est d'un type transformable dont le dossier peut s'incliner vers l'arrière.

19. Module selon la revendication 18, **caractérisé en ce que** le dossier peut s'incliner jusqu'à une configuration horizontale.

20. Module selon l'une des revendications 1 à 19, **caractérisé en ce qu'**il a une longueur comprise entre 1,80 m et 2,10 m.

21. Module selon l'une des revendications 1 à 20, **caractérisé en ce qu'**il a une largeur maximale comprise entre 0,50 m et 0,70 m.

22. Paire de deux modules conformes à l'une quelconque des revendications 1 à 21, disposés tête-bêche en étant accolés l'un à l'autre, ces modules présentant des contours identiques.

23. Paire de deux modules selon la revendication 22, **caractérisé en ce que** chaque module comporte des extrémités en U et est accolé à l'autre par au moins une partie d'un côté de l'extrémité large.

24. Paire de deux modules selon la revendication 22, **caractérisé en ce que** chaque module comporte des extrémités en U, et est accolé à l'autre par au moins une partie d'un côté disposé entre les extrémités de chaque module.

25. Paire de deux modules selon la revendication 22, **caractérisé en ce que** chaque module comporte des extrémités en U, et est accolé à l'autre par au moins une partie d'un côté de l'extrémité étroite.

26. Paire de deux modules selon l'une quelconque des revendications 23 à 25, **caractérisé en ce que** les branches des extrémités en U de chaque module qui sont disposées à l'opposé de l'autre module sont dans le prolongement l'une de l'autre, parallèlement à une direction commune aux deux modules.

27. Alignement de modules selon l'une quelconque des revendications 1 à 4, **caractérisé en ce que** ces modules, définissant des espaces identiques, sont disposés dans le prolongement l'un de l'autre, avec des orientations identiques.

28. Alignement de modules selon l'une quelconque des revendications 5 à 21, **caractérisé en ce que** ces modules, définissant des espaces identiques, sont disposés dans le prolongement l'un de l'autre, avec des orientations identiques, les ouvertures (32) de ces modules étant alignées les unes avec les autres.

29. Alignement selon l'une des revendications 27 ou 28, **caractérisé en ce que** deux modules successifs présentent, respectivement, une extrémité étroite (24) à proximité immédiate d'une extrémité large (22).

30. Groupement de modules formé de modules disposés selon deux alignements selon l'une des revendications 27 à 29, en sorte de former une succession de paires de modules selon l'une quelconque des revendications 24 à 28.

31. Tronçon de pont de cabine d'aéronef, comportant une pluralité de modules selon l'une quelconque des revendications 1 à 21.

32. Tronçon selon la revendication 31, **caractérisé en ce que** la pluralité de modules est agencée en sorte de former une pluralité d'alignements de modules selon l'une quelconque des revendications 27 à 29.

33. Tronçon selon la revendication 32 dans lequel deux alignements forment un groupement selon la revendication 30.

34. Tronçon selon la revendication 32, dans lequel un alignement latéral est disposé le long de chaque paroi du tronçon.

35. Tronçon selon la revendication 34, dans lequel cet alignement latéral fait partie d'un groupement selon la revendication 30.

36. Tronçon selon la revendication 34 ou la revendication 35, **caractérisé en ce qu'**il comporte, entre ces alignements latéraux, un ensemble d'alignements séparés de ces alignements latéraux par des couloirs (48) latéraux.

37. Tronçon selon la revendication 36, **caractérisé en ce que** cet ensemble d'alignements est constitué de groupements de modules selon la revendication 31 séparés deux à deux par des couloirs (48).

## Patentansprüche

1. Einzelmodul für Flugzeugpassagiere, umfassend einen Sitz (36), der dazu bestimmt ist, in einer Längsrichtung des Flugzeugs gerichtet zu sein,
wobei dieses Modul eine lang gestreckte Form mit einem ersten Ende (12; 22) großer Breite und einem zum ersten Ende im Wesentlichen parallelen zweiten Ende (14; 24) kleinerer Breite besitzt,
mit einem im wesentlichen geradlinigen Rand (16; 26), der die beiden Enden (12, 14; 22, 24) verbindet und zu diesen beiden Enden (12, 14; 22, 24) im wesentlichen senkrecht ist, und
mit einem dem im wesentlichen geradlinigen Rand (16; 26) gegenüberliegenden Rand, der ebenfalls die beiden Enden verbindet und einerseits ein im wesentlichen geradliniges erstes Segment (20; 30), das sich von dem zweiten Ende (14; 24) aus auf das erste Ende (12; 22) bezüglich des gegenüberliegenden, im wesentlichen geradlinigen Rands (16; 26) divergierend erstreckt, und andererseits ein zweites Segment (18; 28) umfasst, das das freie Ende des ersten Segments (20; 30) mit dem ersten Ende verbindet.

2. Einzelmodul für Flugzeugpassagiere nach Anspruch 1, **dadurch gekennzeichnet, dass** das zweite Segment (18) zum gegenüberliegenden geradlinigen Rand (16) im wesentlichen parallel ist.

3. Einzelmodul für Flugzeugpassagiere nach Anspruch 1, **dadurch gekennzeichnet, dass** das zweite Segment (28) sich von dem ersten Ende auf das zweite Ende zu bezüglich des gegenüberliegenden geradlinigen Rands (26) divergierend erstreckt.

4. Einzelmodul für Flugzeugpassagiere nach Anspruch 2, **dadurch gekennzeichnet, dass** der Divergenzwinkel des ersten Segments (30) größer als der Divergenzwinkel des zweiten Segments (28) ist.

5. Einzelmodul für Flugzeugpassagiere nach einem der Ansprüche 1 bis 4, umfassend:
eine gegenüber und in einem Abstand vom Sitz (36) angeordnete Einrichtung (38) von kleinerer Breite als der Sitz, eine Seitenwand (34), die sich zwischen einer Seite des Sitzes und einer Seite der Einrichtung mindestens auf Höhe der Sitzfläche des Sitzes erstreckt
wobei diese Seitenwand, dieser Sitz und diese Einrichtung einen Raum von lang gestreckter Form begrenzen, der ein Ende großer Breite (22), das von dem Sitz (36) eingenommen wird, und ein Ende kleinerer Breite (24) das von dieser Einrichtung eingenommen wird, besitzt, wobei eine Zugangsöffnung (32) zwischen den Enden auf der der Seitenwand entgegengesetzten Seite vorgesehen ist.

6. Modul nach Anspruch 5, **dadurch gekennzeichnet, dass** der Raum einen Umriss besitzt, der sich von jedem der Enden (22, 24) an ausweitet.

7. Modul nach Anspruch 6, **dadurch gekennzeichnet, dass** das schmale Ende (24) weniger ausgeweitet als das breite Ende (22) ist, so dass der Raum eine Zone maximaler Breite besitzt, die näher bei dem breiten Ende (22) als bei dem schmalen Ende (24) liegt.

8. Modul nach einem der Ansprüche 5 bis 7, **dadurch gekennzeichnet, dass** die Enden (22, 24) jeweils einen Schenkel besitzen, der im Wesentlichen in der Verlängerung eines Schenkels des anderen Endes liegt.

9. Modul nach Anspruch 8, **dadurch gekennzeichnet, dass** die Seitenwand (34) zwischen den Schenkeln angeordnet ist, die denjenigen gegenüberliegen, die im Wesentlichen in der gegenseitigen Verlängerung liegen.

10. Einzelmodul nach Anspruch 5, **dadurch gekennzeichnet, dass** die Enden (22, 24) des Raums lang gestreckter Form jeweils von einer U-förmigen Endwand gebildet sind.

11. Modul nach Anspruch 10, **dadurch gekennzeichnet, dass** die Seitenwand (34) sich von einer der Endwände zur anderen erstreckt.

12. Modul nach einem der Ansprüche 10 oder 11, **dadurch gekennzeichnet, dass** die U-förmigen Endwände jeweils mit Befestigungsmitteln für ihre Befestigung an im Boden der Kabine angeordneten Befestigungslängsschienen versehen sind.

13. Modul nach einem der Ansprüche 5 bis 12, **dadurch gekennzeichnet, dass** die Seitenwand (34) von veränderlicher Höhe ist.

14. Modul nach einem der Ansprüche 5 bis 13, **dadurch gekennzeichnet, dass** die Öffnung (32) eine horizontale Abmessung besitzt, die gleich der Breite der Seitenwand (34) ist.

15. Modul nach Anspruch 5, **dadurch gekennzeichnet, dass** die Einrichtung (38) eine Auflagefläche besitzt, die in einer Höhe angeordnet ist, die auf etwa zehn Zentimeter genau im Wesentlichen gleich der der Sitzfläche des Sitzes ist.

16. Modul nach Anspruch 15, **dadurch gekennzeichnet, dass** die Auflagefläche in einer Höhe zwischen 0,45 m und 0,60 m liegt.

17. Modul nach einem der Ansprüche 5 bis 16, **dadurch gekennzeichnet, dass** die Endwände eine Höhe zwischen 0,45 m und 1,50 m haben.

18. Modul nach einem der Ansprüche 5 bis 17, **dadurch gekennzeichnet, dass** der Sitz (36) von einem verformbaren Typ ist, dessen Rückenlehne sich nach hinten neigen kann.

19. Modul nach Anspruch 18, **dadurch gekennzeichnet, dass** die Rückenlehne sich bis in eine horizontale Konfiguration neigen kann.

20. Modul nach einem der Ansprüche 1 bis 19, **dadurch gekennzeichnet, dass** es eine Länge zwischen 1,80 m und 2,10 m besitzt.

21. Modul nach einem der Ansprüche 1 bis 20, **dadurch gekennzeichnet, dass** es eine maximale Breite zwischen 0,50 m und 0,70 m besitzt.

22. Paar von zwei Modulen gemäß einem der Ansprüche 1 bis 21, die einander entgegengesetzt angeordnet sind, indem sie aneinander angesetzt sind, wobei diese Module identische Umrisse besitzen.

23. Paar von zwei Modulen nach Anspruch 22, **dadurch gekennzeichnet, dass** jedes Modul U-förmige Enden besitzt und an das andere über mindestens einen Teil einer Seite des breiten Endes angesetzt ist.

24. Paar von zwei Modulen nach Anspruch 22, **dadurch gekennzeichnet, dass** jedes Modul U-förmige Enden besitzt und an das andere über mindestens einen Teil einer zwischen den Enden jedes Moduls angeordneten Seite angesetzt ist.

25. Paar von zwei Modulen nach Anspruch 22, **dadurch gekennzeichnet, dass** jedes Modul U-förmige Enden besitzt und an das andere über mindestens einen Teil einer Seite des schmalen Endes angesetzt ist.

26. Paar von zwei Modulen nach einem der Ansprüche 23 bis 25, **dadurch gekennzeichnet, dass** die Schenkel der U-förmigen Enden jedes Moduls, die auf der dem anderen Modul entgegengesetzten Seite angeordnet sind, in der gegenseitigen Verlängerung parallel zu einer den beiden Modulen gemeinsamen Richtung liegen.

27. Reihe von Modulen nach einem der Ansprüche 1 bis 4, **dadurch gekennzeichnet, dass** diese Module, die identische Räume begrenzen, in der gegenseitigen Verlängerung mit identischen Ausrichtungen angeordnet sind.

28. Reihe von Modulen nach einem der Ansprüche 5 bis 21, **dadurch gekennzeichnet, dass** diese Module, die identische Räume begrenzen, in der gegenseitigen Verlängerung mit identischen Ausrichtungen angeordnet sind, wobei die Öffnungen (32) dieser Module miteinander in einer Linie liegen.

29. Reihe nach einem der Ansprüche 27 oder 28, **dadurch gekennzeichnet, dass** zwei aufeinanderfolgende Module jeweils ein schmales Ende (24) in unmittelbarer Nähe eines breiten Endes (22) aufweisen.

30. Modulgruppe, bestehend aus Modulen, die in zwei Reihen nach einem der Ansprüche 27 bis 29 angeordnet sind, so dass sie eine Folge von Modulpaaren nach einem der Ansprüche 24 bis 28 bilden.

31. Flugzeugkabinenbrückenabschnitt, umfassend eine Vielzahl von Modulen nach einem der Ansprüche 1 bis 21.

32. Abschnitt nach Anspruch 31, **dadurch gekennzeichnet, dass** die Vielzahl von Modulen so angeordnet ist, dass eine Vielzahl von Reihen von Modulen nach einem der Ansprüche 27 bis 29 gebildet wird.

33. Abschnitt nach Anspruch 32, bei dem zwei Reihen eine Gruppe nach Anspruch 30 bilden.

34. Abschnitt nach Anspruch 32, bei dem längs jeder Wand des Abschnitts eine seitliche Reihe angeordnet ist.

35. Abschnitt nach Anspruch 34, bei dem diese seitliche Reihe Teil einer Gruppe nach Anspruch 30 bildet.

36. Abschnitt nach Anspruch 34 oder Anspruch 35, **dadurch gekennzeichnet, dass** er zwischen diesen seitlichen Reihen eine Einheit von Reihen umfasst, die von diesen seitlichen Reihen durch seitliche Gänge (48) getrennt sind.

37. Abschnitt nach Anspruch 36, **dadurch gekennzeichnet, dass** diese Einheit von Reihen aus Modulgruppen nach Anspruch 31, die paarweise durch Gänge (48) getrennt sind, gebildet ist.

## Claims

1. An individual module for an aircraft passenger comprising a seat (36) adapted to be oriented in a longitudinal direction of the aircraft,
said module having an elongate shape with a first end (12 ; 22) of large width and a second end (14 ; 24) of narrower width substantially parallel to the first end,
with a substantially straight side (16 ; 26) connecting the two ends (12, 14 ; 22, 24) and being substantially perpendicular to said two ends (12, 14 ; 22, 24), and
with a side opposite said substantially straight side (16; 26) also connecting the two ends and comprising a first substantially straight segment (20 ; 30) extending from the second end (14 ; 24) towards the first end (12 ; 22) while diverging from the opposite substantially straight side (16 ; 26), and a second segment (18 ; 28) connecting the free end of the first segment (20 ; 30) to the first end.

2. The individual module for an aircraft passenger according to claim 1, **characterized in that** the second segment (18) is substantially parallel to the opposite straight side (16).

3. The individual module for an aircraft passenger according to claim 1, **characterized in that** the second segment (28) extends from the first end towards the second end while diverging from the opposite straight side (26).

4. The individual module for an aircraft passenger according to claim 2, **characterized in that** the divergence angle of the first segment (30) is greater than the divergence angle of the second segment (28).

5. An individual module for an aircraft passenger according to one of claims 1 to 4 comprising:
a fitting (38) facing and at a distance from the seat (36), and narrower than the seat,
a lateral wall (34) extending between one side of the seat and one side of the fitting, at least adjacent the seat rest,
said lateral wall, said seat and said fitting defining an elongate space having an end of large width (22) occupied by the seat (36) and a narrower end (24) occupied by said fitting, an access opening (32) being disposed between the ends and opposite the lateral wall.

6. The module according to claim 5, **characterized in that** the space has a contour that widens from each of the ends (22, 24).

7. The module according to claim 6, **characterized in that** the narrow end (24) widens less than the wide end (22) so that the space has an area of maximum width that is nearer the wide end (22) than the narrow end (24).

8. The module according to one of claims 5 to 7, **characterized in that** the ends (22, 24) each have a branch that is substantially aligned with a branch of the other end.

9. The module according to claim 8, **characterized in that** the lateral wall (34) is disposed between the branches opposite those that are substantially aligned with each other.

10. The individual module according to claim 5, **characterized in that** the ends (22, 24) of the elongate space are each defined by a U-shaped end wall.

11. The module according to claim 10, **characterized in that** the lateral wall (34) extends from one end wall to the other.

12. The module according to one of claims 10 or 11, **characterized in that** the U shaped end walls are each provided with fixing means for fixing them to longitudinal fixing rails disposed in the floor of the cabin.

13. The module according to one of claims 5 to 12, **characterized in that** the lateral wall (34) is of varying height.

14. The module according to one of claims 5 to 13, **characterized in that** the opening (32) has a horizontal dimension equal to the width of the lateral wall (34).

15. The module according to claim 5, **characterized in that** the fitting (38) has a support surface at a height substantially equal to that of the seat rest, to within approximately 10 centimeters.

16. The module according to claim 15, **characterized in that** the support surface is at a height from 0.45 m to 0.60 m.

17. The module according one of claims 5 to 16, **characterized in that** the end walls have a height from 0.45 m to 1.50 m.

18. The module according to one of claims 5 to 17, **characterized in that** the seat (36) is a convertible seat whose back rest can be inclined toward the rear.

19. The module according to claim 18, **characterized in that** the back rest can be inclined as far as a horizontal configuration.

20. The module according one of claims 1 to 19, **characterized in that** it has a length from 1.80 m to 2.10 m.

21. The module according one of claims 1 to 20, **characterized in that** it has a maximum width from 0.50 m to 0.70 m.

22. A pair of modules in accordance with any one of claims 1 to 21, disposed head-to-tail and in contact with each other and having identical contours.

23. The pair of modules according to claim 22, **characterized in that** each module has U-shaped ends and is in contact with the other module through at least a portion of one side of the wide end.

24. The pair of modules according to claim 22, **characterized in that** each module has U-shaped ends and is in contact with the other module through at least a portion of a side disposed between the ends of each module.

25. The pair of modules according to claim 22, **characterized in that** each module has U shaped ends and is in contact with the other module through at least a portion of one side of the narrow end.

26. The pair of modules according to any one of claims 23 to 25, **characterized in that** the branches of the U-shaped ends of each module opposite the other end of the other module are aligned with each other, parallel to a direction common to the two modules.

27. A row of modules according to any one of claims 1 to 4, **characterized in that** said modules define identical spaces and are disposed in alignment with each other with identical orientations.

28. A row of modules according to any one of claims 5 to 21, **characterized in that** said modules, defining identical spaces, are disposed in alignment with each other with identical orientations, the openings (32) of said modules being aligned with each other.

29. The row of modules according to one of claims 27 to 28, **characterized in that** two successive modules respectively have a narrow end (24) in the immediate vicinity of a wide end (22).

30. A group of modules formed of modules disposed in two rows according to one of claims 27 to 29, to form a succession of pairs of modules according to any one of claims 24 to 28.

31. A section of aircraft cabin, comprising a plurality of modules according to any one of claims 1 to 21.

32. The section according to claim 31, **characterized in that** the plurality of modules is arranged to form a plurality of rows of modules according to any one of claims 27 to 29.

33. The section according to claim 32 in which two rows form a group according to claim 30.

34. The section according to claim 32, in which a lateral row is disposed along each wall of the section.

35. The section according to claim 34, in which said lateral row is part of a group according to claim 30.

36. The section according to claim 34 or claim 35, **characterized in that** it comprises, between said lateral rows, a set of rows separated from said lateral rows by lateral aisles (48).

37. The section according to claim 36, **characterized in that** said set of rows consists of groups of modules according to claim 31 separated in pairs by aisles (48).
